# EUROPÄISCHE PATENTSCHRIFT

(11) **EP 1 397 406 B1**
(45) Veröffentlichungstag und Bekanntmachung des Hinweises auf die Patenterteilung: **31.03.2010**
(21) Anmeldenummer: 02720361.1
(22) Anmeldetag: 18.04.2002
(51) Int. Cl.: C08G 18/10, C09J 175/04, C08K 3/04, C08K 3/26

(54) **KLEBSTOFF, GEFÜLLT MIT OBERFLÄCHENBEHANDELTER KREIDE UND RUSS**
ADHESIVE FILLED WITH SURFACE-TREATED CHALK AND SOOT
ADHESIF CHARGE EN CRAIES ET EN SUIES TRAITEES EN SURFACE

(30) Priorität: 10.05.2001 EP 01111158
(43) Veröffentlichungstag der Anmeldung: 17.03.2004
(73) Patentinhaber: Sika Technology AG, 6340 Baar (CH)
(72) Erfinder: PFENNINGER, Ueli, CH-8804 Au (CH); STADELMANN, Ursula, CH-8046 Zürich (CH); KÜLLING, Annemarie, 8197 Rafz (CH)
(74) Vertreter: Sika Patent Attorneys
(86) Internationale Anmeldenummer: PCT/IB2002/001247
(87) Internationale Veröffentlichungsnummer: WO 2002/090411

(56) Entgegenhaltungen:
- DE-A- 19 923 300
- US-A- 5 756 751
- PATENT ABSTRACTS OF JAPAN vol. 2000, no. 15, 6. April 2001 (2001-04-06) & JP 2000 351894 A (YOKOHAMA RUBBER CO LTD:THE), 19. Dezember 2000 (2000-12-19)

## Beschreibung

Diese Anmeldung beansprucht die Priorität der europäischen Patentanmeldung Nr. 01 111 158.0, die am 10. Mai 2001 eingereicht wurde und deren ganze Offenbarung hiermit durch Bezug aufgenommen wird.

### Technisches Gebiet

Die vorliegende Erfindung betrifft gefüllte Klebstoffe, insbesondere gefüllte silanvernetzende Klebstoffe.

### Stand der Technik

Kunststoffe aus Polyurethan sind schon lange bekannt als speziell geeignete Materialien für Klebeanwendungen, welche hohe Flexibilität bei gleichzeitig guten Festigkeiten erfordern. Einkomponentige Systeme, bei welchen Isocyanatendgruppen des Polyurethan-Polymers mit Luftfeuchtigkeit reagieren, wodurch das Polymer vernetzt wird, weisen den Vorteil der einfachen Anwendbarkeit auf, da kein Dosieren der zweiten Komponente und kein Mischvorgang erforderlich sind. Solche Systeme finden verbreitet Anwendung als Kleb- und Dichtstoffe in der Industrie und im Bau. Eine Weiterentwicklung dieser Polyurethan-Polymere besteht darin, als funktionelle Gruppen anstelle der Isocyanatgruppen Silangruppen einzuführen, welche ebenfalls mit Luftfeuchtigkeit zu Si-O-Si Bindungen vernetzen. Die Herstellung silanvernetzender Polyurethan-Polymere durch die Umsetzung der endständigen Isocyanatgruppen mit mercapto- oder aminofunktionellen Silanen wird z.B. in US 3,632,557 (Union Carbide) und US 5,364,955 (Bayer) beschrieben. US 3,632,557 (Union Carbide) beschreibt die Herstellung silanvernetzender organischer Polymere, indem endständige Isocyanatgruppen von Polyurethan-Prepolymeren mit mercapto- oder aminofunktionellen Silanen umgesetzt werden. Diese Polymere können u.a. einen Füllstoff enthalten. Als Beispiele sind weder Calciumcarbonat noch Russ aufgezählt.

Aufgrund dieser Patentschrift lassen sich zwar silanvernetzende Polyurethan Kleb- und Dichtstoffe herstellen, die auf diesem Weg erreichbaren mechanischen Werte für Formulierungen mit markttauglichen Rohstoffkosten bewegen sich aber in der Grössenordung 1.5 MPa Zugfestigkeit und 150% Bruchdehnung, was für eine Anwendung als Klebstoff in der Automobilindustrie nicht genügt.

US 5,364,955 (Bayer) beschreibt für die Herstellung silanvernetzender Polyurethan Polymere spezielle sekundäre Aminosilane (Asparaginsäureester-Derivate), welche an Polyurethan Prepolymere mit Isocyanat-Endgruppen angehängt werden. Die silanendständigen Polymere können verwendet werden für die Formulierung von dichtenden Materialien. Hinweise auf speziell geeignete Füllstoffe zur Erreichung spezieller Eigenschaften sind nicht erwähnt.

Der Vorteil der Vernetzung über Silangruppen besteht darin, dass einerseits bei der Vernetzung kein CO₂ gebildet wird, welches unter Umständen zu störenden Blasen im Klebstoff führen kann, und dass andererseits der Anwender nicht mit potentiell gesundheitsschädlichen monomeren Isocyanaten in Berührung kommt.

Neben diesen in bezug auf die Füllstoffe unspezifischen Dokumenten gibt es bereits Arbeiten, die sich mit der Erzielung spezieller Eigenschaften durch Verwendung spezifischer Füllstoffe befassen.

US 6,001,946 (Witco) beschreibt mehr oder weniger dieselben auf Asparaginsäureester-Derivate von aminofunktionellen Silanen basierenden silanendständigen Polyurethan-Polymere wie US 5 364 955. Als verstärkende Füllstoffe werden "fumed silica", gefälltes Siliciumdioxid und Calciumcarbonat aufgezählt, wobei behandeltes Calciumcarbonat mit einer Teilchengrösse von 0.07 bis 4 Mikrons Teilchengrösse als bevorzugter Füllstoff bezeichnet wird. Diese Füllstoffe können allein oder als Füllstoffkombination eingesetzt werden. Als bevorzugte Füllstoffmenge werden 80 bis 150 Teile bezogen auf 100 Teile Polymer erwähnt. Auf der Grundlage dieses Patentes lassen sich Klebstoffe mit Zugfestigkeiten von ca. 1.5 MPa bei ca. 300 % Dehnung erreichen. Solche Klebstoffe sind nicht fest genug für die Anwendung in der Automobilindustrie.

EP 0 676 403 (Witco) beschreibt silanendständige Polyurethan Polymere, welche arylaminofunktionelle Silane enthalten. Dichtstoffe, die auf diesen Polymeren basieren, sollen höhere Dehnung, höhere Flexibilität und tieferes Elastizitätsmodul aufweisen als der damalige Stand der Technik. Als,bevorzugte Calciumcarbonat-Füllstoffe werden behandelte Typen mit Teilchengrössen von 0.05 bis 10 Mikrons in einer Menge bis zu 100 Teile pro 100 Teile Polymer beschrieben. Auf der Grundlage dieser Patentschrift lassen sich Klebstoffe mit Zugfestigkeiten von etwa 2.8 MPa bei 300% Dehnung erreichen. Diese Zugfestigkeit ist immer noch zu tief für die Anwendung in der Automobilindustrie. Ferner hat sich gezeigt, dass silanvernetzende Polyurethan-Polymere, welche Phenylaminosilan enthalten, im ausgehärteten Zustand eine schlechte Alterungsbeständigkeit bei Wärmelagerung aufweisen.

US 5,703,146 (Kaneka) beschreibt Dichtmassen, die aufgebaut sind auf 100 Teilen silanendständigem Oxypropylen-Polymer mit enger Molekulargewichtsverteilung, 100 bis 200 Teilen Calciumcarbonat, das eine Teilchengrösse von höchstens 0.5 Mikron aufweist und mit einer Fettsäure oberflächenbehandelt ist, und mehreren weiteren Zusätzen. Das Polymer hat einen Anteil an der Gesamtmasse von 15 - 35 %. Durch die Kombination des Polymers mit der engen Molekulargewichtsverteilung und damit tiefer Viskosität mit dem feinteiligen beschichteten Calciumcarbonat wird bei guter Auspressbarkeit genügend Standfestigkeit erhalten, aber keine ausreichend hohen Zugfestigkeiten.

US 4,222,925 (Inmont Corporation) beschreibt einen Klebstoff mit schneller Härtungsgeschwindigkeit und hoher Festigkeit, der im Automobilbau zum Einkleben von Windschutzscheiben in Kombination mit einem Primer eingesetzt wird. Der Klebstoff ist aufgebaut auf einem silanendständigen Polyurethan-Polymer (hergestellt wie in US 3,632,557 beschrieben), einem speziellen aminofunktionellen Silan und Russ mit einem Wassergehalt von höchstens 0.05%. Durch die Zugabe von getrocknetem Russ soll die mechanische Festigkeit des Klebstoffes stark erhöht werden. Allgemeine Angaben über die Menge Russ, die eingesetzt wird, sind keine vorhanden, doch wird in Beispiel 2 der Einsatz von 35 Teilen Russ auf 100 Teile Polymer offenbart, was zu sehr hohen mechanischen Werten führt. Eine Klebstoff-Formulierung mit einem Gesamtanteil von 73% Polymer in der Formulierung ist für einen praxistauglichen Einsatz jedoch zu teuer.

WO 99/55755 (Essex) beschreibt eine Methode zum Einkleben von Fenstern in eine Struktur. Der verwendete Klebstoff basiert auf einem silanendständigen Oxyalkylen Polymer, einem silanendständigen Polyurethan-Polymer, oder ähnlichen silanendständigen Systemen. Das Polymer weist bevorzugt einen Anteil an der Gesamtmasse des Klebstoffes von 45 bis 85 % auf, enthält einen Zinnkatalysator in einer bevorzugten Menge von 0.1 bis 0.4 %, ein spezielles aminofunktionelles Silan und andere Additive. Russ, Calciumcarbonat und andere verstärkende Füllstoffe werden als mögliche Additive aufgezählt, wobei Russ als einziger eingesetzter verstärkender Füllstoff bevorzugt ist. Bevorzugt ist eine Menge verstärkender Füllstoff von 20 bis 33 % bezogen auf die gesamte Klebstoffmasse, wobei Zusammensetzungen mit Zugfestigkeiten von bis zu 1028 psi (= 7.1 MPa) offenbart sind. Durch den hohen Russanteil im Klebstoff kann mit diesen Klebstoffen der geforderte hohe elektrische Durchgangswiderstand für Verklebungen in der Automobilindustrie nicht erreicht werden.

Es ist auch bereits bekannt als Zusatz zu silanvernetzenden Polymeren sowohl feinteiliges beschichtetes Calciumcarbonat als auch Russ zu verwenden.

EP 0 819 749 (Simson) beschreibt silanvernetzende Kleb- und Dichtstoffe mit hohem elektrischem Widerstand, die für industrielle Applikationen, wie das Einkleben von Auto-Windschutzscheiben oder insbesondere als Kleb- und Dichtstoff für elektrische Geräte, geeignet sind. Diese Kleb- und Dichtstoffe müssen folgende Komponenten enthalten: Silanendständiges Polymer, Vernetzungskatalysator, Trocknungsmittel, Haftvermittler und Rheologie-Controller, wobei 25% bis 55% der Zusammensetzung in Form eines Calciumcarbonat-Füllstoffes vorliegen können. Beim Einsatz gefällter, mit Fettsäure beschichteter Calciumcarbonattypen soll die Viskosität der Zusammensetzung erhöht, sowie die Standfestigkeit und - bei Wahl einer Mischung aus gefälltem und ungefälltem Calciumcarbonat - die mechanische Festigkeit verbessert werden. Russ, in einer Menge von 0.2 bis 5 % bezogen auf die gesamte Masse, ist als Pigment erwähnt.

EP 0 931 800 (Witco Corp.) beschreibt Dichtstoffe mit verbesserten mechanischen Werten, guter Aushärtungsgeschwindigkeit, wenig Oberflächenklebrigkeit und nicht zu hoher Viskosität. Diese basieren auf einem silanendständigen Polyurethan-Prepolymer, welches hergestellt wird durch umsetzten eines OH-endständigen Polyurethan-Prepolymers, mit einem isocyanatfunktionellen Silan. Als mögliche verstärkende Füllstoffe werden "fumed silica", "precipitated silica" und Calciumcarbonat genannt, wobei - um noch weiter zu verstärken - Russ als Hauptfüllstoff vorgeschlagen wird. Behandelte Calciumcarbonate mit Teilchengrössen von 0.07 bis 4 Mikrons sind bevorzugte Füllstoffe. Die Füllstoffe können alleine oder in Kombination verwendet werden, wobei als bevorzugte Füllstoffmenge 80 bis 150 Teile pro 100 Teile Polymer angegeben werden. Die in den Beispielen maximal erreichte Zugfestigkeit beträgt 2.7 MPa.

Keinem dieser Dokumente ist ein Hinweis zu entnehmen, wie eine Klebstoff-Zusammensetzung auf Basis eines silanterminierten Polymers aufgebaut sein muss, um den in der Automobilindustrie gestellten Anforderungen zu genügen. Keines dieser Dokumente legt nahe, dass bei Verwendung eines speziellen Typs silanterminierter Polymeren, nämlich spezieller silanvernetzender Polyurethan-Prepolymere, ein Bereich existiert, in dem die silanvernetzenden Polyurethan-Prepolymere mit einer Kombination aus feinteiligem beschichtetem Calciumcarbonat und Russ derart gefüllt werden können, dass die für die Herstellung von Klebstoffen für die Automobilindustrie notwendigen Eigenschaften erhalten werden. Diese Eigenschaften sind - aufgrund der starken mechanischen Belastungen der Klebschicht - eine hohe Festigkeit des Klebstoffes bei guter Flexibilität und - um eine korrosionsbeständige Verklebung verschiedenartiger Metalle zu erreichen - ein hoher elektrischer Durchgangswiderstand des ausgehärteten Klebstoffes. Diese Eigenschaften sind, näher spezifiziert,
- eine Zugfestigkeit von mindestens 4.5 MPa,
- eine Bruchdehnung von mindestens 250 %,
- ein elektrischer Durchgangswiderstand von mindestens 10⁸ Ohm cm, sowie
- eine gute Applizierbarkeit,
und dies alles bei
- nicht zu hohen Rohstoffkosten.

Ein hoher elektrischer Durchgangswiderstand ist auch wichtig, da eine zu gute Leitfähigkeit der Klebschicht Störungen des Radioempfangs beim Einkleben von Heckscheiben mit eingebauten Antennen verursachen kann.

Eine weitere Voraussetzung für einen praxistauglichen Klebstoff ist seine gute Applizierbarkeit. Das heisst, der unausgehärtete Klebstoff muss im Reparaturfall mit vernünftigem Kraftaufwand aus der Kartusche auspressbar sein. Die Auspresskraft aus der Kartusche durch eine Oeffnung mit 5 mm Durchmesser sollte einen Wert von 2000 N nicht überschreiten.

Des weiteren dürfen die Rohstoffkosten eines praxistauglichen silanvernetzenden Polyurethanklebstoffes eine gewisse Grenze nicht überschreiten. Formulierungen, welche einen hohen Polymeranteil von 70% oder mehr haben, sind deshalb nicht markttauglich.

Alle diese Anforderungen zu erfüllen ist mit einem silanvernetzenden Klebstoff nach dem heutigen Stand der Technik nicht möglich.

Ueberraschenderweise wurde gefunden, dass sich silanvernetzende Polyurethanklebstoffe formulieren lassen, welche die vorher genannten Anforderungen für das Verkleben von Bauteilen in der Automobilindustrie erfüllen, indem ein spezielles, silanvernetzendes Polyurethan-Polymer in einem festgelegten Bereich mit feinteiligem beschichtetem Calciumcarbonat und Russ kombiniert wird.

### Darstellung der Erfindung

Ein Gegenstand der vorliegenden Erfindung sind deshalb Klebstoffe, welche die oben gestellten Anforderungen erfüllen können. Solche erfindungsgemässen Klebstoffe enthalten die folgenden drei Bestandteile:
a) silanvernetzendes Polyurethan Polymer, aufgebaut nach der folgenden Formel (I): 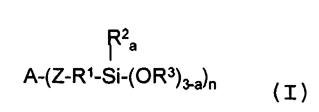 wobei R¹ für eine Alkylengruppe mit 2 bis 8 C-Atomen, linear oder verzweigt, steht,
   R² für einen Alkylrest mit 1 bis 8 C-Atomen steht,
   R³ für einen Alkylrest mit 1 bis 5 C-Atomen steht,
   a für 0 oder 1 steht,
   Z für einen Schwefel oder ein NR⁴ steht, wobei R⁴ für ein Wasserstoffatom oder einen organischen Rest steht, beispielsweise eine Alkylgruppe oder eine Arylgruppe mit 1 bis 20 C-Atomen, oder eine Verbindung mit Estergruppen wie beispielsweise eine Gruppierung der Formel (II) 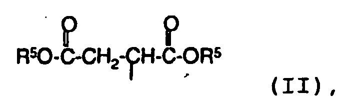 wobei R⁵ für eine Alkylgruppe mit 1 bis 8 C-Atomen steht,
   n eine Zahl von 2 bis 4 bedeutet,
   und A für einen Rest eines Polyurethan-Prepolymers mit der Funktionalität n steht,
b) feinteiliges beschichtetes Calciumcarbonat, wobei darunter mit Fettsäure behandelte Calciumcarbonate mit einer Teilchengrösse von 0.05 bis 1 Mikron verstanden werden, mit einer Dichte von ca. 2.6 - 2.7 g/ml, und
c) Russ, wobei Typen mit einer grossen Oberfläche bevorzugt werden, mit einer Dichte von ca. 1.8 g/ml,
wobei auf 100 g Polymer a) 20 bis 50 ml Füllstoffe b) + c) vorhanden sind, und das Volumen-Verhältnis von b) zu c) zwischen 70/30 und 30/70 liegt.

Vorzugsweise steht A für einen Polyurethanrest, der erhältlich ist durch Umsetzung von handelsüblichen Polyolen mit einem Überschuss an handelsüblichen Polyisocyanaten, wobei das mittlere Molekulargewicht von A üblicherweise im Bereich von 500 bis 100000 g/mol liegt, und A mindestens n Urethangruppen enthält. Insbesondere bedeutet A einen Rest der Formel (III) 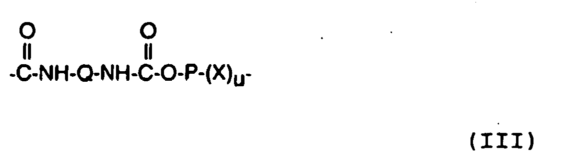 wobei Q für einen aromatischen, aliphatischen oder cycloaliphatischen Rest steht, welcher insbesondere ein Polyisocyanat, speziell bevorzugt ein handelsübliches Diisocyanat, nach Abspaltung von zwei oder mehr Isocyanatgruppen darstellt, und

P für einen Rest steht, welcher ein Polyoxyalkylen-Polyol oder ein Polyalkyldien-Polyol, insbesondere ein handelsübliches Polyol, nach Abspaltung von mindestens zwei OH-Gruppen darstellt,
X einen Rest der Formel (IV) bedeutet 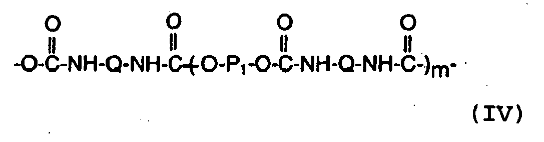 wobei m unabhängig von einander 0 bis 5 bedeutet und wobei
Q die obengenannte Bedeutung hat und wobei
P₁ = P ist oder P(X)ᵤ bedeutet, mit der Massgabe, dass maximal ein P₁ gleich P(X)ᵤ ist und wobei
u = 1 oder 2 ist.

Werden die oben genannten Bedingungen eingehalten, entstehen Klebstoffe, welche geeignet sind für das dichtende Verkleben von Bauteilen, welche zumindest teilweise aus Metall bestehen, wie z.B. in der Automobilindustrie. Die Klebstoffe weisen gute mechanische Eigenschaften, einen hohen elektrischen Durchgangswiderstand, gute Applizierbarkeit und vernünftige Rohstoffkosten auf. Sie sind gut applizierbar (d.h. sie weisen eine Auspresskraft von höchstens 2000 N auf), sie haben eine Zugfestigkeit von mindestens 4.5 MPa, eine Bruchdehnung von mindestens 250%, und sie haben einen elektrischen Durchgangswiderstand von mindestens 10⁸ Ohm cm.

### Weg(e) zur Ausführung der Erfindung

Ein wesentlicher Bestandteil der erfindungsgemässen Klebstoffzusammensetzungen ist das silanvernetzende Polyurethan Polymer, das aufgebaut ist nach der folgenden Formel (I): 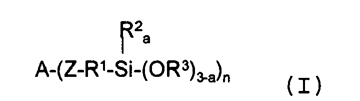 wobei R¹ für eine Alkylengruppe mit 2 bis 8 C-Atomen, linear oder verzweigt, steht,
R² für einen Alkylrest mit 1 bis 8 C-Atomen steht,
R³ für einen Alkylrest mit 1 bis 5 C-Atomen steht,
a für 0 oder 1 steht,
Z für einen Schwefel oder ein NR⁴ steht, wobei R⁴ für ein Wasserstoffatom oder einen organischen Rest steht, beispielsweise eine Alkylgruppe oder eine Arylgruppe mit 1 bis 20 C-Atomen, oder eine Verbindung mit Estergruppen wie beispielsweise eine Gruppierung der Formel (II) 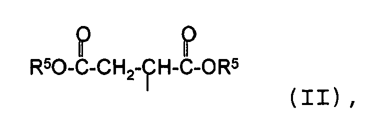 wobei R⁵ für eine Alkylgruppe mit 1 bis 8 C-Atomen steht,
n eine Zahl von 2 bis 4 bedeutet,
und A für einen Rest eines Polyurethan-Prepolymers mit der Funktionalität n steht.

Vorzugsweise steht A für einen Polyurethanrest, der erhältlich ist durch Umsetzung von handelsüblichen Polyolen mit einem Überschuss an handelsüblichen Polyisocyanaten, wobei das mittlere Molekulargewicht von A üblicherweise im Bereich von 500 bis 100000 g/mol liegt, und A mindestens n Urethangruppen enthält. Insbesondere bedeutet A einen Rest der Formel (III) 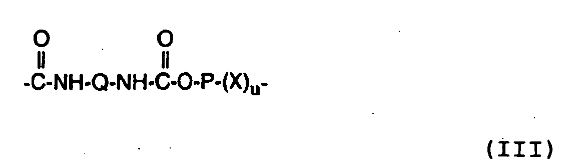 wobei Q für einen aromatischen, aliphatischen oder cycloaliphatischen Rest steht, welcher insbesondere ein Polyisocyanat, speziell bevorzugt ein handelsübliches Diisocyanat, nach Abspaltung von zwei oder mehr Isocyanatgruppen darstellt, und

P für einen Rest steht, welcher ein Polyoxyalkylen-Polyol oder ein Polyalkyldien-Polyol, insbesondere ein handelsübliches Polyol, nach Abspaltung von mindestens zwei OH-Gruppen darstellt,
X einen Rest der Formel (IV) bedeutet 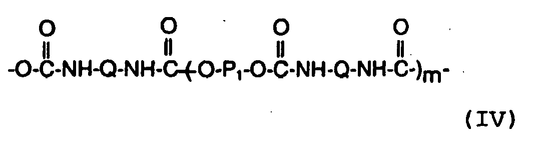 wobei m unabhängig von einander 0 bis 5 bedeuten und wobei
Q die oben angegebene Bedeutung hat und wobei
P₁ gleich P ist oder P(X)ᵤ bedeutet, mit der Massgabe, dass maximal ein P₁ gleich P(X)ᵤ ist, und wobei
u = 1 oder 2 ist.

Im bevorzugten Fall von n = 2 lässt sich der Rest A mit der Formel (V) darstellen: 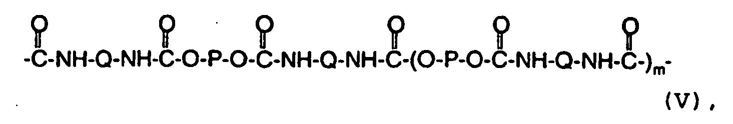 wobei Q für einen Rest steht, welcher ein Diisocyanat, insbesondere ein handelsübliches Diisocyanat, nach Abspaltung der beiden Isocyanatgruppen darstellt, und P für einen Rest steht, welcher ein Polyol, insbesondere ein handelsübliches Polyol, nach Abspaltung der beiden OH-Gruppen darstellt, und m = 0 bis 5 ist.

Bevorzugte Polyisocyanate sind Diisocyanate. Als Beispiele seien die folgenden, in der Polyurethanchemie bestens bekannten Isocyanate erwähnt:
2,4- und 2,6-Toluoldiisocyanat, 4,4'- und 2,4'-Diphenylmethandiisocyanat, Isophorondiisocyanat, 2,2,4- und 2,4,4-Trimethyl-1,6-hexamethylendiisocyanat, 1,6-Hexamethylendiisocyanat, m- und p-Tetramethylxylylendiisocyanat, die Isomeren des 4,4'-oder 2,4'-Dicyclohexylmethandiisocyanates, Polymere oder Oligomere dieser Isocyanate, sowie Mischungen aus zwei oder mehr der angegebenen Isocyanate.

Polyole, die nach Abspaltung von mindestens zwei OH-Gruppen den Rest P ergeben, sind vorzugsweise die folgenden, in der Polyurethanchemie bestens bekannten Rohstoffe oder Mischungen davon:
Polyetherpolyole, welche das Polymerisationsprodukt aus Ethylenoxid, Propylenoxid oder Butylenoxid oder Mischungen davon sind, oder hydroxyterminierte Polybutadienpolymere. Die Polyole weisen im allgemeinen eine OH-Funktionalität von 1.8 bis 3 und ein Molekulargewicht von 500 bis 20000 g/mol auf. Zusätzlich zu den genannten Polyolen können bei der Herstellung Verbindungen mit zwei oder mehr OH-Gruppen als Kettenverlängerer oder Vernetzer mitverwendet werden, so dass deren Reste ebenfalls zu P beitragen können. Als Beispiele seien 1,4-Butandiol oder Trimethylolpropan genannt.

Die erfindungsgemäss eingesetzten silanterminierten Prepolymere können hergestellt werden, indem - in einem ersten Schritt - Polyole mit einem Ueberschuss Polyisocyanat umgesetzt werden, sodass ein Prepolymer mit Isocyanat-Endgruppen entsteht. Diese Isocyanat-Endgruppen werden anschliessend mit einem organofunktionellen Silan, welches eine mit Isocyanaten reaktive Gruppe enthält, umgesetzt.

Als organofunktionelle Silane sind Verbindungen mit der Formel (VI) 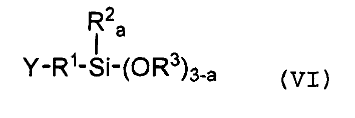 geeignet, wobei R¹, R², R³ und a die oben beschriebene Bedeutung haben, und Y für -SH oder -NH₂ oder -NHR⁴ steht, und R⁴ ebenfalls die oben beschriebene Bedeutung hat. Besonders geeigent ist ein Aminosilan, welches als R⁴ die folgende Gruppierung (II) aufweist 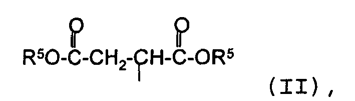 wobei R⁵ für eine Alkylgruppe mit 1 bis 8 C-Atomen steht.

Solche organofunktionellen Silane können aus dem entsprechenden Maleinsäure- oder Fumarsäure-Diester und einem Aminosilan mit Y = -NH₂ durch eine Additionsreaktion an die Doppelbindung hergestellt werden. Als Beispiel einer solchen organofunktionellen Silanverbindung sei die folgende genannt, hergestellt aus Maleinsäurediethylester und γ-Aminopropyltrimethoxysilan:

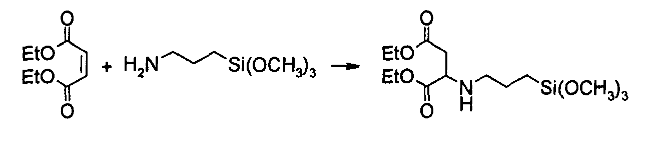

Als Polyole können die bereits oben als "Lieferanten" des Restes P genannten, in der Polyurethanchemie bestens bekannten Rohstoffe oder Mischungen davon eingesetzt werden.

Als Polyisocyanate zur Herstellung eines solchen Prepolymers kommen die ebenfalls bereits oben als "Lieferanten" des Restes Q genannten aliphatischen, cycloaliphatischen oder aromatischen Isocyanate mit mindestens zwei Isocyanatgruppen pro Molekül in Frage.

Die Herstellung kann dadurch erfolgen, dass die Polyol- und die Isocyanatkomponente mit üblichen Verfahren, z.B. bei Temperaturen von 50 bis 100°C, gegebenenfalls unter Mitverwendung geeigneter Katalysatoren, umgesetzt werden, wobei die Isocyanatkomponente im Ueberschuss eingesetzt wird. Als Reaktionsprodukt entsteht das erwähnte Polyurethan Prepolymer mit Isocyanat-Endgruppen. Dieses wird anschliessend umgesetzt mit dem beschriebenen isocyanatreaktiven organofunktionellen Silan, wobei das erwähnte silanendständige Polyurethan Prepolymer gebildet wird. Das organofunktionelle Silan wird dabei stöchiometrisch oder in einem leichten Ueberschuss im Verhältnis zu den Isocyanatgruppen eingesetzt.

Als das unter b) beschriebene feinteilige beschichtete Calciumcarbonat eignen sich insbesondere Calciumcarbonate, die mit Fettsäuren, wie beispielsweise Stearaten, oberflächenbeschichtet sind und die eine mittlere Teilchengrösse von 0.05 bis 1 Mikron aufweisen. Der Gehalt an organischer Substanz bewegt sich zwischen 0.9 und 5% Gewichtsanteilen. Speziell geeignete Typen sind beispielsweise Winnofil SP und Winnofil SPT von ICI oder Socal U1S2 von Solvay. Die Dichte dieser Materialien liegt bei ca. 2.6 bis 2.7 g/ml.

Bei dem unter c) genannten Russ, handelt es sich vorzugsweise um einen Typ mit einer grossen Oberfläche und mit einer Dichte von ca. 1.8 g/ml,

Geeignet sind alle möglichen Russtypen, sofern sie vor dem Einmischen ins Prepolymere getrocknet wurden. Zur Reduktion der elektrischen Leitfähigkeit können oxidierte oder teiloxidierte Russtypen eingesetzt werden, wobei diese teurer sind und deshalb - um ein nicht zu teures, markttaugliches Produkt zu erhalten - nur beschränkt einsetzbar sind.

Damit auch bei Verwendung von nicht oxidiertem Russ ein Produkt erhältlich ist, das die geforderten, oben genannten Eigenschaften erfüllt, sind die Mengenverhältnisse wesentlich. Deshalb kommen vorzugsweise auf 100 g Polymer a) 20 bis 50 ml Füllstoffe b) + c), und das Volumen-Verhältnis von b) zu c) liegt zwischen 70/30 und 30/70.

Neben diesen notwendigerweise anwesenden Komponenten kann der erfindungsgemässe Klebstoff einen oder mehrere der folgenden Bestandteile enthalten:
Weichmacher, beispielsweise organische Ester, z.B. Phthalate wie Dioctylphthalat oder Diisodecylphthalat, Adipate wie zum Beispiel Dioctyladipat, Polybutene oder andere, gegenüber Silanen nicht reaktive Verbindungen, Lösemittel, weitere anorganische oder organische Füllstoffe wie z.B. andere Calciumcarbonate, Kaoline, Aluminiumoxide, Kieselsäuren, Fasern, z.B. aus Polyethylen, Pigmente, Verdickungsmittel, z.B. Harnstoffverbindungen oder Polyamidwachse, Stabilisatoren gegen Wärme oder UV, Haftvermittler, z.B. Aminosilane oder Epoxysilane, insbesondere H₂N-(CH₂)₃-Si(OCH₃)₃, H₂N-(CH₂)₂-NH-(CH₂)₃-Si(OCH₃)₃ oder NH-[(CH₂)₃-Si(OCH₃)₃]₂. Trocknungsmittel, beispielsweise Vinyltrimethoxysilan, Katalysatoren, beispielsweise Aminverbindungen wie z.B. Isophorondiamin oder Jeffamine, oder Organozinnverbindungen, wie z.B. Dibutylzinndilaurat, Dibutylzinnacetylacetonat oder andere in der Polyurethanchemie übliche Katalysatoren, sowie weitere in Polyurethan Dicht- und Klebstoffen üblicherweise eingesetzte Substanzen.

Gegenüber den silanvernetzenden Polyurethan-Prepolymeren weisen die Klebstoffe der vorliegenden Erfindung den Vorteil auf, dass sie isocyanatfrei sind und sich dank der erfindungsgemässen Kombination eines speziellen silanvernetzenden Ployurethan-Prepolymers, Russ und feinteiligem beschichtetem Calciumcarbonat für Anwendungen eignen bei denen gleichzeitig Zugfestigkeiten von mehr als 4.5 MPa, Bruchdehnungen von mehr als 250%, ein elektrischer Durchgangswiderstand von mehr als 10⁸ Ohm cm und eine gute Applizierbarkeit gefordert sind. Solche Applikationen sind beispielsweise das Abdichten und Verkleben von metallischen Bauteilen, insbesondere das flexible Verkleben. Die erfindungsgemässen Klebstoffe sind somit einerseits geeignet für die Bus-, LKW und Schienenfahrzeugherstellung, und andererseits können sogar die Anforderungen an Montageklebstoffe in der Automobilindustrie erfüllt werden.

Die Erfindung wird in der Folge anhand von Beispielen näher erläutert, die diese aber in keiner Weise einschränken sollen.

### Beispiele:

### Verwendete Ausgangsmaterialien:

| | |
|---|---|
| Polyol PPG 12000 | Acclaim 12200 von Bayer |
| Weichmacher | Diisodecylphtalat, z.B. von BASF |
| feinteiliges beschichtetes Calciumcarbonat | Socal U1S2 von Solvay |
| Russ | Printex 60 von Degussa Hüls |
| Katalysatorlösung | 90 Gewichtteile Diisodecylphtalat |
| | 10 Gewichtsteile Dibutylzinndilaurat |

### Beschreibung der Prüfmethoden:

Die Auspresskraft wurde ermittelt an Aluminiumkartuschen mit einem Durchmesser von 45 mm, wobei der Klebstoff an der Kartuschenspitze durch eine Oeffnung von 5 mm gepresst wurde. Das Auspressen erfolgte durch eine Zugprüfmaschine unter Aufnahme der erforderlichen Kraft, mit einer Geschwindigkeit von 60 mm/min.

Die Zugfestigkeit und die Bruchdehnung wurden bestimmt an ausgehärteten Filmen in einer Schichtdicke von ca. 3 mm nach DIN 53504 (S2).

Der elektrische Durchgangswiderstand wurde gemessen bei 1000 V an ausgehärteten Filmen in einer Schichtdicke von ca. 3 mm nach DIN 53482.

### Beispiel 1:

### N-(3-Trimethoxysilylpropyl)-asparaginsäurediethylester (Maleinsäureester-Aminosilan-Addukt)

509.9 g γ-Aminopropyltrimethoxysilan wurden vorgelegt. Unter gutem Rühren wurden bei Raumtemperatur anschliessend langsam 490.1 g Maleinsäurediethylester tropfenweise zugegeben. Der Temperaturanstieg, bedingt durch die exotherme Reaktion, wurde durch Kühlung in einem Wasserbad bei 30°C gestoppt. Die Mischung wurde anschliessend während 8 Stunden bei Raumtemperatur gerührt, bis die Umsetzung abgeschlossen war.

### Beispiel 2:

### Silanterminiertes Polyurethan Prepolymer

1000g Polyol PPG 12000, 78.7 g Isophorondiisocyanat und 0.13 g Dibutylzinndilaurat wurden unter stetigem Rühren auf 90°C aufgeheizt und auf dieser Temperatur belassen, bis der Gehalt an freien Isocyanatgruppen einen Wert von 0.7% erreichte. Anschliessend wurden 63.2 g N-(3-Trimethoxysilylpropyl)-asparaginsäurediethylester aus Beispiel 1 eingemischt und die Mischung wurde während ca. 4 Stunden bei 90°C gerührt, bis kein freies Isocyanat mittels IR-Spektroskopie mehr nachgewiesen werden konnte. Anschliessend wurden zum Auffangen von Restfeuchtigkeit 0.4 g Silan A-171 eingemischt, das Prepolymer auf Raumtemperatur abgekühlt und unter Ausschluss von Feuchtigkeit aufbewahrt.

### Beispiele 3 bis 7: Erfingungsgemässe Klebstoffe

Die Inhaltsstoffe der einzelnen Beispiele wurden der Reihe nach gemäss Tabelle 1 in einem geeigneten Vakummischer, z.B. Planimax von Molteni, homogen vermischt. In einem ersten Schritt wurden das Prepolymer, der Weichmacher und die Füllstoffe homogenisiert, anschliessend wurden die zusätzlichen Silane und die Katalysatorlösung eingemischt. Die fertigen Klebstoffe wurden in luftdichte Kartuschen abgefüllt.

### Beispiele 8 bis 11: Klebstoffe ausserhalb des erfindungsgemässen Bereichs

Das Vorgehen zur Herstellung ist dasselbe wie für die Beispiele 3 bis 7.

**Tabelle 1: Zusammensetzung der Klebstoffe (Gewichtsteile)**

| **Beispiel:** | **3** | **4** | **5** | **6** | **7** | **8** | **9** | **10** | **11** |
|---|---|---|---|---|---|---|---|---|---|
| Prepolymer aus Beispiel 2 | 100 | 100 | 100 | 100 | 100 | 100 | 100 | 100 | 100 |
| Weichmacher | 35 | 35 | 35 | 35 | 35 | 35 | 35 | 35 | 35 |
| feinteiliges beschichtetes Calciumcarbonat | 31.2 | 62.4 | 52 | 41.6 | 78 | 104 | 78 | 26 | 0 |
| Russ | 32.4 | 28.8 | 36 | 43.2 | 36 | 0 | 18 | 54 | 72 |
| Vinyltrimethoxysilan | 2.5 | 2.5 | 2.5 | 2.5 | 2.5 | 2.5 | 2.5 | 2.5 | 2.5 |
| N-β-(Aminoethyl)-γ-aminopropyltrimethoxysilan | 2.5 | 2.5 | 2.5 | 2.5 | 2.5 | 2.5 | 2.5 | 2.5 | 2.5 |
| Katalysatorlösung | 2.5 | 2.5 | 2.5 | 2.5 | 2.5 | 2.5 | 2.5 | 2.5 | 2.5 |

**Tabelle 2: Füllgrad der Klebstoffe pro 100 g Polymer**

| **Beispiel:** | **3** | **4** | **5** | **6** | **7** | **8** | **9** | **10** | **11** |
|---|---|---|---|---|---|---|---|---|---|
| gesamtes Füllstoffvolumen | 30 ml | 40ml | 40 ml | 40 ml | 50 ml | 40 ml | 40 ml | 40 ml | 40 ml |
| Verhältnis Calciumcarbonat / Russ (in Volumen) | 40 / 60 | 60 / 40 | 50 / 50 | 40 / 60 | 60 / 40 | 100 / 0 | 75 / 25 | 25 /75 | 0/100 |
| erfindungsgemässe Zusammensetzung: | ja | ja | ja | ja | ja | nein | nein | nein | nein |

**Tabelle 3: Eigenschaften der Klebstoffe**

| **Beispiel:** | **3** | **4** | **5** | **6** | **7** | **8** | **9** | **10** | **11** |
|---|---|---|---|---|---|---|---|---|---|
| Auspresskraft [N] | 660 | 870 | 1100 | 1640 | 2000 | 240 | 510 | 3000 | 7000 |
| Zugfestigkeit [MPa] | 5.9 | 4.8 | 5.5 | 4.5 | 4.9 | 1.8 | 3.3 | 4.8 | 6.3 |
| Bruchdehnung [%] | 300 | 280 | 300 | 250 | 250 | 330 | 310 | 160 | 150 |
| elektrischer Durchgangswiderstand [Ohm cm] | 4.3x10¹⁰ | 3.1x10¹⁰ | 2.7x10¹⁰ | 1.2x10¹⁰ | 3.0x10¹¹ | 1.3x10¹¹ | 1.3x10¹¹ | 1.4x10⁷ | 3.2x10⁵ |

Die erfindungsgemässen Klebstoffe der Beispiele 3 bis 7 erfüllen die geforderten Eigenschaften, d.h. sie weisen eine Zugfestigkeit von mindestens 4.5 MPa, eine Bruchdehnung von mindestens 250%, einen elektrischen Durchgangswiderstand von mindestens 10⁸ Ohm cm und eine Auspresskraft von höchstens 2000 N auf.

Die Klebstoffe aus den Beispielen 8 bis 11, welche ausserhalb des erfindungsgemässen Bereiches liegen, erfüllen nicht alle geforderten Eigenschaften. Die Beispiele 8 und 9, welche keinen oder nur einen geringen Anteil Russ enthalten, weisen zuwenig Zugfestigkeit auf. Die Beispiele 10 und 11, welche nur einen geringen Anteil oder gar kein feinteiliges beschichtetes Calciumcarbonat enthalten, weisen eine zu hohe Auspresskraft, eine zu geringe Bruchdehnung und einen zu tiefen elektrischen Durchgangswiderstand auf.

Während in der vorliegenden Anmeldung bevorzugte Ausführungen der Erfindung beschrieben sind, ist klar darauf hinzuweisen, dass die Erfindung nicht auf diese Beschränkt ist und in auch anderer Weise innerhalb des Umfangs der folgenden Ansprüche ausgeführt werden kann.

## Patentansprüche

1. Klebstoffzusammensetzung enthaltend mindestens ein silanvernetzendes Polymer, feinteiliges beschichtetes Calciumcarbonat und Russ, **dadurch gekennzeichnet, dass**
a) das mindestens eine silanvernetzende Polyurethan Polymer aufgebaut ist nach der folgenden Formel (I) : 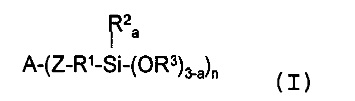 wobei R¹ für eine Alkylengruppe mit 2 bis 8 C-Atomen, linear oder verzweigt, steht,
R² für einen Alkylrest mit 1 bis 8 C-Atomen steht,
R³ für einen Alkylrest mit 1 bis 5 C-Atomen steht,
a für 0 oder 1 steht,
Z für einen Schwefel oder ein NR⁴ steht, wobei R⁴ für ein Wasserstoffatom oder einen organischen Rest steht, beispielsweise eine Alkylgruppe oder eine Arylgruppe mit 1 bis 20 C-Atomen, oder eine Verbindung mit Estergruppen wie beispielsweise eine Gruppierung der Formel (II) 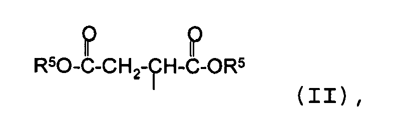 wobei R⁵ für eine Alkylgruppe mit 1 bis 8 C-Atomen steht,
n eine Zahl von 2 bis 4 bedeutet,
und A für einen Rest eines Polyurethan-Prepolymers mit der Funktionalität n steht,
b) das feinteilige beschichtete Calcumcarbonat ein mit Fettsäure, insbesondere Stearat, beschichtetes Calciumcarbonat, mit einer Teilchengrösse von 0.05 bis 1 Mikron und mit einer Dichte von ca. 2.6 - 2.7 g/ml ist, und
c) der Russ Russ einer Dichte von ca. 1.8 g/ml, insbesondere Russ mit einer grossen Oberfläche, ist,
wobei auf 100 g Polymer a) 20 bis 50 ml Füllstoffe b) + c) vorhanden sind, und das Volumen-Verhältnis von b) zu c) zwischen 70/30 und 30/70 liegt.

2. Die Klebstoffzusammensetzung gemäs Anspruch 1, **dadurch gekennzeichnet, dass** A für einen Polyurethanrest steht, der erhältlich ist durch Umsetzung von handelsüblichen Polyolen mit einem Überschuss an handelsüblichen Polyisocyanaten, wobei das mittlere Molekulargewicht von A üblicherweise im Bereich von 500 bis 100000 g/mol liegt, und A mindestens n Urethangruppen enthält.

3. Die Klebstoffzusammensetzung gemäss Anspruch 1 oder 2, **dadurch gekennzeichnet, dass** A einen Rest der Formel (III) 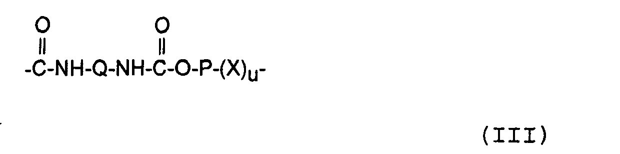 bedeutet,
wobei Q für einen aromatischen, aliphatischen oder cycloaliphatischen Rest steht, welcher insbesondere ein Polyisocyanat, speziell bevorzugt ein handelsübliches Diisocyanat, nach Abspaltung von zwei oder mehr Isocyanatgruppen darstellt, und
P für einen Rest steht, welcher ein Polyoxyalkylen-Polyol oder ein Polyalkyldien-Polyol, insbesondere ein handelsübliches Polyol, nach Abspaltung von mindestens zwei OH-Gruppen darstellt,
X einen Rest der Formel (IV) bedeutet 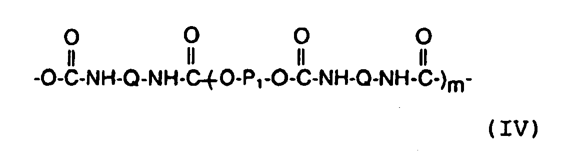 wobei m unabhängig von einander 0 bis 5 bedeuten und wobei
Q die oben angegebene Bedeutung hat und wobei
P₁ gleich P ist oder P(X)ᵤ bedeutet, mit der Massgabe, dass maximal ein P₁ gleich P(X)ᵤ ist und wobei
u = 1 oder 2 ist und wobei
das mittlere Molekulargewicht von A vorzugsweise im Bereich von 500 bis 100000 g/mol liegt,

4. Die Klebstoff gemäss einem der Ansprüche 1 bis 3, **dadurch gekennzeichnet, dass** der Rest A eine Funktionalität n = 2 aufweist und sich durch Formel (V) darstellen lässt 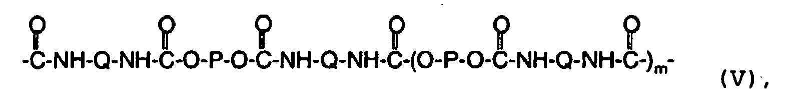 wobei Q für einen Rest steht, welcher ein aliphatisches, cycloaliphatisches oder aromatisches Polyisocyanat nach Abspaltung von mindestens 2 Isocyanatgruppen, insbesondere ein Diisocyanat, nach Abspaltung beider Isocyanatgruppen darstellt, und
P für einen Rest steht, welcher ein Polyalkyldien- oder Polyoxyalkylen-Polyol nach Abspaltung von mindestens 2 der OH-Gruppen, insbesondere ein Diol, nach Abspaltung beider OH-Gruppen, darstellt, und
m = 0 bis 5 ist.

5. Klebstoff gemäss einem der vorangehenden Ansprüche, **dadurch gekennzeichnet, dass** Q der Rest ist, der nach Abspaltung von 2 Isocyanatgruppen aus einem der Isocyanate aus der folgenden Gruppe zurückbleibt:
2,4- und 2,6-Toluoldiisocyanat, 4,4'- und 2,4'-Diphenylmethandiisocyanat, Isophorondiisocyanat, 2,2,4- und 2,4,4-Trimethyl-1,6-hexamethylendiisocyanat, 1,6-Hexamethylendiisocyanat, m- und p-Tetramethylxylylendiisocyanat, die Isomeren des 4,4'-oder 2,4'-Dicyclohexylmethandiisocyanates, Polymere oder Oligomere dieser Isocyanate, sowie Mischungen aus zwei oder mehr der angegebenen Isocyanate.

6. Klebstoff gemäss einem der vorangehenden Ansprüche, **dadurch gekennzeichnet, dass** P der Rest ist, der nach Abspaltung von mindestens zwei OH-Gruppen aus einem Polyol aus der folgenden Gruppe zurückbleibt:
Polyetherpolyole, welche das Polymerisationsprodukt aus Ethylenoxid, Propylenoxid oder Butylenoxid oder Mischungen davon sind, oder hydroxyterminierte Polybutadienpolymere, insbesondere Polyole mit einer OH-Funktionalität von 1.8 bis 3 und einem Molekulargewicht von 500 bis 20000 g/mol.

7. Klebstoff gemäss einem der vorangehenden Ansprüche, **dadurch gekennzeichnet, dass** er zudem einen oder mehrere der folgenden Bestandteile enthält:
Weichmacher, insbesondere organische Ester und Polybutene, Lösemittel, weitere anorganische oder organische Füllstoffe, wie z.B. andere Calciumcarbonate, Kaoline, Aluminiumoxide, Kieselsäuren, Fasern, Pigmente, Verdickungsmittel, Stabilisatoren gegen Wärme oder UV, Haftvermittler, Trocknungsmittel, Katalysatoren.

8. Verfahren zur Herstellung eines Klebstoffs gemäss einem der vorangehenden Ansprüche, **dadurch gekennzeichnet, dass** das mindestens eine silanterminierte Polyurethan-Prepolymer hergestellt wird, indem - in einem ersten Schritt - Polyole mit einem Ueberschuss Polyisocyanat umgesetzt werden, sodass ein Prepolymer mit Isocyanat-Endgruppen entsteht, und dass diese Isocyanat-Endgruppen anschliessend mit mindestens einem organofunktionellen Silan, welches eine mit Isocyanaten reaktive Gruppe enthält, umgesetzt werden, worauf das so erhaltene Prepolymer anschliessend mit zuvor getrocknetem Russ und zuvor getrocknetem, feinteiligem, beschichteten Calciumcarbonat unter Feuchtigkeitsausschluss gemischt wird.

9. Verfahren gemäss Anspruch 8, **dadurch gekennzeichnet, dass** das organofunktionelle Silan eine Verbindung mit der Formel (VI) 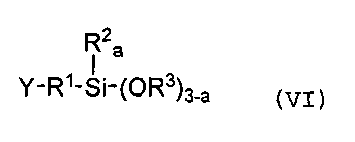 ist, wobei R¹, R², R³ und a die oben beschriebene Bedeutung haben, und Y für -SH oder -NH₂ oder -NHR⁴ steht, und R⁴ ebenfalls die oben beschriebene Bedeutung hat, insbesondere Aminosilan, welches als R⁴ die folgende Gruppierung aufweist 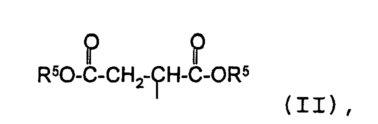 wobei R⁵ für eine Alkylgruppe mit 1 bis 8 C-Atomen steht.

10. Verfahren gemäss Anspruch 8 oder 9, **dadurch gekennzeichnet, dass** das Polyol- und das Isocyanat bei Temperaturen von 50 bis 100°C, gegebenenfalls unter Mitverwendung geeigneter Katalysatoren, umgesetzt werden, wobei die Isocyanatkomponente im Ueberschuss eingesetzt wird, und wobei dieses Polyurethan-Prepolymer mit Isocyanat-Endgruppen anschliessend mit dem organofunktionellen Silan stöchiometrisch oder in einem leichten Ueberschuss umgesetzt wird.

## Claims

1. An adhesive composition comprising at least one silane-crosslinking polymer, fine-particle coated calcium carbonate, and soot, **characterized in that**
a) the at least one silane-crosslinking polyurethane polymer is constructed in accordance with the following formula (I): 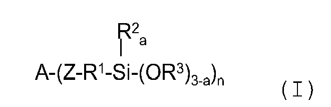 where R¹ stands for an alkylene group having 2 to 8 carbon atoms, linear or branched,
R² stands for an alkyl radical having 1 to 8 carbon atoms,
R³ stands for an alkyl radical having 1 to 5 carbon atoms,
a stands for 0 or 1,
Z stands for a sulfur or an NR⁴, where R⁴ stands for a hydrogen atom or an organic radical, for example, an alkyl group or an aryl group having 1 to 20 carbon atoms, or a compound having ester groups such as, for example, a moiety of the formula (II) 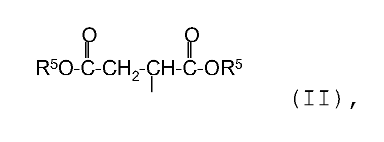 where R⁵ stands for an alkyl group having 1 to 8 carbon atoms,
n denotes a number from 2 to 4,
and A stands for a radical of a polyurethane prepolymer with the functionality n,
b) the fine-particle coated calcium carbonate, is a calcium carbonate coated with fatty acid, especially stearate, and having a particle size of from 0.05 to 1 micron and a density of approximately 2.6 - 2.7 g/ml, and
c) the soot is soot with a density of approximately 1.8 g/ml, in particular soot having a large surface area,
there being from 20 to 50 ml of fillers b) + c) per 100 g polymer a), and the volume ratio of b) to c) being between 70/30 and 30/70.

2. The adhesive composition according to claim 1, **characterized in that** A stands for a polyurethane radical obtainable by reacting commercially customary polyols with an excess of commercially customary polyisocyanates, the average molecular weight of A usually being in the range from 500 to 100 000 g/mol, and A containing at least n urethane groups.

3. The adhesive composition according to claim 1 or 2, **characterized in that** A denotes a radical of the formula (III) 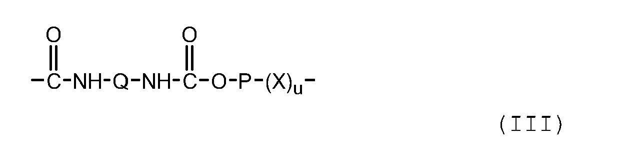 where Q stands for an aromatic, aliphatic or cycloaliphatic radical which represents in particular a polyisocyanate, with special preference a commercially customary diisocyanate, following elimination of two or more isocyanate groups, and
P stands for a radical which represents a polyoxyalkylene-polyol or polyalkyldiene-polyol, in particular a commercially customary polyol, following elimination of at least two OH groups,
X denotes a radical of the formula (IV) 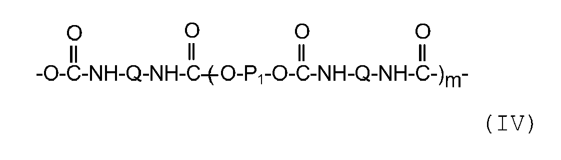 where m independently of one another denotes 0 to 5 and where
Q has the abovementioned definition and where
P₁ = P or denotes P(X)ᵤ, with the proviso that not more than one P₁ is P(X)ᵤ and where
u = 1 or 2, and where
the average molecular weight of A is preferably in the range from 500 to 100 000 g/mol,

4. The adhesive according to one of claims 1 to 3, **characterized in that** the radical A has a functionality n = 2 and can be depicted by formula (V) 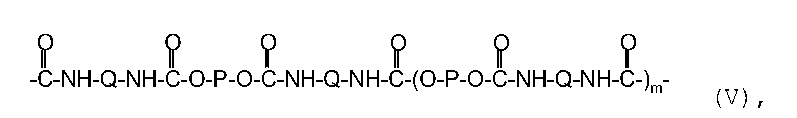 where Q stands for a radical which represents an aliphatic, cycloaliphatic or aromatic polyisocyanate following elimination of at least 2 isocyanate groups, in particular a dissocyanate, following elimination of both isocyanate groups, and
P stands for a radical which represents a polyalkyldiene- or polyoxyalkylene-polyol following elimination of at least 2 of OH groups, in particular a diol, following elimination of both OH groups, and
m = 0 to 5.

5. The adhesive according to one of the preceding claims, **characterized in that** Q is the radical which remains following elimination of 2 isocyanate groups from one of the isocyanates from the following group:
2,4- and 2,6-toluene diisocyanate, 4,4'- and 2,4'-diphenylmethane diisocyanate, isophorone diisocyanate, 2,2,4- and 2,4,4-trimethyl-1,6-hexamethylene diisocyanate, 1,6-hexamethylene diisocyanate, m- and p-tetramethylxylylene diisocyanate, the isomers of 4,4'- or 2,4'-dicyclohexylmethane diisocyanate, polymers or oligomers of these isocyanates, and mixtures of two or more of the stated isocyanates.

6. The adhesive according to one of the preceding claims, **characterized in that** P is the radical that remains following the elimination of at least two OH groups from a polyol from the following group:
polyetherpolyols, which are the polymerization product of ethylene oxide, propylene oxide or butylene oxide or mixtures thereof, or hydroxy-terminated polybutadiene polymers, especially polyols having an OH functionality of from 1.8 to 3 and a molecular weight from 500 to 20 000 g/mol.

7. The adhesive according to one of the preceding claims, **characterized in that** it further comprises one or more of the following constituents:
plasticizers, especially organic esters and polybutenes, solvents, further organic or inorganic fillers, such as other calcium carbonates, kaolines, aluminas, silicas, fibers, pigments, thickeners, heat stabilizers or UV stabilizers, adhesion promoters, dryers, catalysts.

8. A process for preparing an adhesive according to one of the preceding claims, **characterized in that** the at least one silane-terminated polyurethane prepolymer is prepared by reacting - in a first step - polyols with an excess of polyisocyanate to give a prepolymer having isocyanate end groups and **in that** these isocyanate end groups are subsequently reacted with at least one organofunctional silane containing an isocyanate-reactive group, whereupon the prepolymer thus obtained is subsequently mixed in the absence of moisture with soot dried beforehand and with fine-particle coated calcium carbonate dried beforehand.

9. The process according to claim 8, **characterized in that** the organofunctional silane is a compound with the formula (VI) 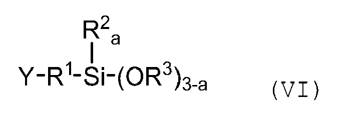 where R¹, R², R³ and a have a definition described above and Y stands for -SH or -NH₂ or -NHR⁴, and R⁴ likewise has the definition described above, especially aminosilane containing as R⁴ the following moiety 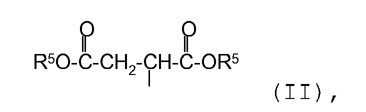 where R⁵ stands for an alkyl group having 1 to 8 carbon atoms.

10. The process according to claim 8 or 9, **characterized in that** the polyol- and the isocyanate are reacted at temperatures of from 50 to 100°C, using where appropriate suitable catalysts as well, the isocyanate component being employed in excess, and where this polyurethane prepolymer having isocyanate end groups is subsequently reacted with the organofunctional silanes stoichiometrically or in a slight excess.

## Revendications

1. Composition adhésive contenant au moins un polymère réticulant par silane, du carbonate de calcium finement divisé, revêtu et de la suie, **caractérisée en ce que**
a) ledit au moins un polymère de polyuréthane réticulant par silane présente une structure selon la formule suivante (1) : 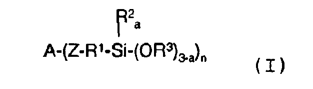 où
R¹ représente un groupe alkylène comprenant 2 à 8 atomes de carbone, linéaire ou ramifié,
R² représente un radical alkyle comprenant 1 à 8 atomes de carbone,
R³ représente un radical alkyle comprenant 1 à 5 atomes de carbone,
a vaut 0 ou 1,
Z représente soufre ou NR⁴, où
R⁴ représente un atome d'hydrogène ou un radical organique, par exemple un groupe alkyle ou aryle comprenant 1 à 20 atomes de carbone, ou un composé avec des groupes ester tels que par exemple un groupe de formule (II) 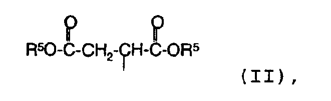 où
R⁵ représente un groupe alkyle comprenant 1 à 8 atomes de carbone,
n signifie un nombre de 2 à 4 et
A représente un radical d'un prépolymère de polyuréthane présentant la fonctionnalité n,
b) le carbonate de calcium finement divisé, revêtu est un carbonate de calcium revêtu d'acide gras, en particulier de stéarate, présentant une grosseur des particules de 0,05 à 1 micron et une densité d'environ 2,6-2,7 g/ml, et
c) la suie est une suie d'une densité d'environ 1,8 g/ml, en particulier de la suie avec une grande surface,
où il existe, pour 100 g de polymère a), 20 à 50 ml de charges b) + c) et le rapport volumique de b) à c) est situé entre 70/30 et 30/70.

2. Composition adhésive selon la revendication 1, **caractérisée en ce que** A représente un radical polyuréthane, qui peut être obtenu par transformation de polyols usuels du commerce avec un excès de polyisocyanates usuels du commerce, le poids moléculaire moyen de A étant usuellement situé dans la plage de 500 à 100 000 g/mole, et A contenant au moins n groupes uréthane.

3. Composition adhésive selon la revendication 1 ou 2, **caractérisée en ce que** A signifie un radical de formule (III) 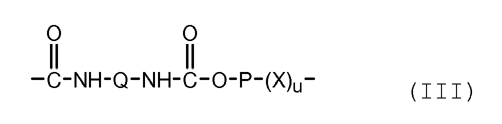 où
Q représente un radical aromatique, aliphatique ou cycloaliphatique qui représente en particulier un polyisocyanate, de manière particulièrement préférée un diisocyanate usuel du commerce, après l'élimination de deux groupes isocyanate ou plus, et
P représente un radical, qui représente un polyoxyalkylène-polyol ou un polyalkyldiènepolyol, en particulier un polyol usuel du commerce, après l'élimination d'au moins deux groupes OH,
X représente un radical de formule (IV) 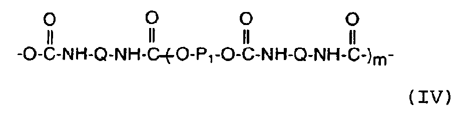
où
m signifie, indépendamment l'un de l'autre, 0 à 5 et où
Q a la signification susmentionnée et où
P₁ représente P ou signifie P(X)ᵤ à condition qu'au maximum un P₁ représente P(X)ᵤ et où
u = 1 ou 2, et où
le poids moléculaire moyen de A se situe de préférence dans la plage de 500 à 100 000 g/mole.

4. Adhésif selon l'une quelconque des revendications 1 à 3, **caractérisé en ce que** le radical A présente une fonctionnalité n = 2 et peut être représenté par la formule (V) 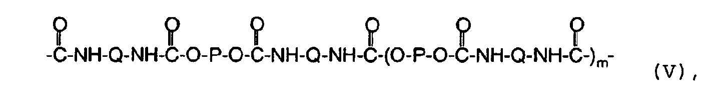 où
Q représente un radical qui représente un polyisocyanate aliphatique, cycloaliphatique ou aromatique après l'élimination d'au moins 2 groupes isocyanate, en particulier un diisocyanate, après l'élimination des deux groupes isocyanate, et
P représente un radical, qui représente un polyalkyldiène-polyol ou un polyoxyalkylène-polyol après l'élimination d'au moins deux des groupes OH, en particulier un diol, après l'élimination des deux groupes OH, et
m = 0 à 5.

5. Adhésif selon l'une quelconque des revendications précédentes, **caractérisé en ce que** Q est le radical qui reste après l'élimination de deux groupes isocyanate d'un des isocyanates du groupe suivant :
2,4-toluènediisocyanate et 2,6-toluènediisocyanate, 4,4'-diphénylméthanediisocyanate et 2,4'-diphénylméthanediisocyanate, isophoronediisocyanate, 2,2,4-triméthyl-1,6-hexaméthylènediisocyanate et 2,4,4-triméthyl-1,6-hexaméthylènediisocyanate, 1,6-hexaméthylènediisocyanate, m-tétraméthylxylylènediisocyanate et p-tétraméthylxylylènediisocyanate, les isomères du 4,4'-dicyclohexylméthanediisocyanate ou du 2,4'-dicyclohexylméthanediisocyanate, les polymères ou oligomères de ces isocyanates, ainsi que les mélanges de deux des isocyanates indiqués ou plus.

6. Adhésif selon l'une quelconque des revendications précédentes, **caractérisé en ce que** P est le radical qui reste après l'élimination d'au moins deux groupes OH d'un polyol du groupe suivant :
les polyétherpolyols, qui sont le produit de polymérisation d'oxyde d'éthylène, d'oxyde de propylène ou d'oxyde de butylène ou leurs mélanges, ou les polymères de polybutadiène terminés par hydroxy, en particulier les polyols présentant une fonctionnalité OH de 1,8 à 3 et un poids moléculaire de 500 à 20 000 g/mole.

7. Adhésif selon l'une quelconque des revendications précédentes, **caractérisé en ce qu'**il contient en outre un ou plusieurs des constituants suivantes :
des plastifiants, en particulier des esters organiques et des polybutènes, des solvants, d'autres charges inorganiques ou organiques, telles que par exemple d'autres carbonates de calcium, des kaolins, des oxydes d'aluminium, des silices, des fibres, des pigments, des épaississants, des stabilisants contre la chaleur ou aux UV, des promoteurs d'adhérence, des dessiccateurs, des catalyseurs.

8. Procédé pour la préparation d'un adhésif selon l'une quelconque des revendications précédentes, **caractérisé en ce qu'**on prépare au moins un prépolymère de polyuréthane terminé par silane **en ce que** - dans une première étape - on transforme des polyols avec un excès de polyisocyanate, de manière telle qu'on obtient un prépolymère avec des groupes terminaux de type isocyanate et **en ce que** ces groupes terminaux de type isocyanate sont ensuite transformés avec au moins un silane organofonctionnel qui contient un groupe réactif avec des isocyanates, suite à quoi le prépolymère ainsi obtenu est ensuite mélangé avec de la suie séchée au préalable et du carbonate de calcium séché au préalable, finement divisé, revêtu, à l'abri de l'humidité.

9. Procédé selon la revendication 8, **caractérisé en ce que** le silane organofonctionnel est un composé de formule (VI) 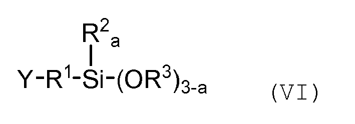 où R¹, R², R³ et a ont la signification décrite ci-dessus, et Y représente -SH ou -NH₂ ou -NHR⁴, et R⁴ a également la signification décrite ci-dessus, en particulier l'aminosilane, qui présente comme R⁴ le groupe suivant 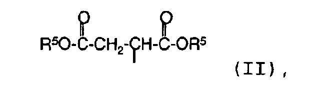 où R⁵ représente un groupe alkyle comprenant 1 à 8 atomes de carbone.

10. Procédé selon la revendication 8 ou 9, **caractérisé en ce que** le polyol et l'isocyanate sont transformés à des températures de 50 à 100°C, le cas échéant avec utilisation conjointe de catalyseurs appropriés, le composant isocyanate étant utilisé en excès, et ce prépolymère de polyuréthane avec des groupes terminaux isocyanate étant transformé ensuite avec le silane organofonctionnel, en une quantité stoechiométrique ou avec un léger excès.
